# EUROPÄISCHE PATENTANMELDUNG

(11) **EP 2 070 618 A1**
(43) Veröffentlichungstag der Anmeldung: **17.06.2009**
(21) Anmeldenummer: 08105808.3
(22) Anmeldetag: 17.11.2008
(51) Int. Cl.: B23B 51/04, B28D 1/04, E21B 10/48

(54) **Kernbohrkrone für Gestein**

(30) Priorität: 12.12.2007 DE 102007055774
(71) Anmelder: HILTI Aktiengesellschaft, 9494 Schaan (LI)
(72) Erfinder: Griessinger, Oliver, 6840 Götzis (AT); Garcia, Luis Fernando, 7000 Chur (CH); Bohn, Klaus-Peter, 9473 Gams (CH)

(57) **Zusammenfassung**

Eine Kernbohrkrone (1) mit einem rohrförmigen Schaft (2) mit einer an einem ersten Endbereich koaxial befestigten Drehmitnahme (3) zur Verbindung mit einer drehenden Werkzeugmaschine sowie mit mehreren umlaufend versetzten, am gegenüberliegenden offenen zweiten Endbereich angeordneten Hartstoffeinsätzen (4) mit einer definierten Schneidkante (5), wobei jeder einzelne Hartstoffeinsatz (4) auf einem Zwischenträgersegment (6) befestigt ist, welches an dem zweiten Endbereich in axialer Verlängerung des Schaftes (2) befestigt ist, wobei der zweite Endbereich zusätzliche Führungssegmente (7a, 7b) aufweist, an denen kein Hartstoffeinsatz (4) befestigt ist.

## Beschreibung

Die Erfindung bezeichnet eine Kernbohrkrone zum Bearbeiten von überwiegend sprödem Material wie Gestein, Beton und Mauerwerk.

Übliche Kernbohrkronen mit Durchmessern bis zu mehreren 100 mm bestehen aus einem rohrförmigen Schaft mit einer an dem geschlossenen Endbereich koaxial befestigten Drehmitnahme zur Verbindung mit einer drehenden Werkzeugmaschine und mehreren, an dem offenen Endbereich bspw. durch Hartlöten oder Schweissen befestigten Einsätzen aus Hartstoff, welche ohne definierte Schneidkanten bspw. als Sinter-Diamant-Beläge ausgebildet sind.

Nach der DE4242465 weist eine Kernbohrkrone mehrere unterschiedlich angeordnete und ausgebildete Polykristalline-Diamant(PKD)-Schneidelemente mit definierten Schneidkanten auf, welche direkt in axialen Ausnehmungen des rohrförmigen Schaftes befestigt sind. Zur direkten Befestigung der Hartstoffeinsätze durch Hartlöten oder Elektronenstrahlschweissen müssen die Ausnehmungen des Rohrs mit hoher Oberflächenqualität im Befestigungsbereich der Hartstoffeinsätze ausgebildet sein.

Nach der EP1319455 sind die PKD-Schneidelemente mit definierten Schneidkanten an einem Zwischenträgersegment befestigt, welches selbst an dem offenen Endbereich der Kernbohrkrone befestigt ist.

Die Aufgabe der Erfindung besteht in der Realisierung einer Kernbohrkrone mit definierten Schneiden, welche bei zweckentsprechender Verwendung zum Bearbeiten von sprödem Material weniger vibriert.

Die Aufgabe wird im Wesentlichen durch die Merkmale des Anspruchs 1 gelöst. Vorteilhafte Weiterbildungen ergeben sich aus den Unteransprüchen.

So weist eine Kernbohrkrone einen rohrförmigen Schaft mit einer an einem ersten Endbereich koaxial befestigten Drehmitnahme zur Verbindung mit einer drehenden Werkzeugmaschine sowie mehrere umlaufend versetzte, am gegenüberliegenden offenen zweiten Endbereich angeordnete Hartstoffeinsätze mit einer definierten Schneidkante auf, wobei jeder einzelne Hartstoffeinsatz auf einem Zwischenträgersegment befestigt ist, welches an dem zweiten Endbereich in axialer Verlängerung des Schafts befestigt ist, wobei der zweite Endbereich zusätzliche Führungssegmente aufweist, an denen kein Hartstoffeinsatz befestigt ist.

Durch die sich ergebende höhere Anzahl der Führungskontakte der umlaufend versetzten Hartstoffeinsätze sowie der Führungssegmente im Kreisringloch werden Schwingungsmoden mit einer geringeren Anzahl umlaufend versetzter Schwingungsknoten gedämpft. Zudem wird durch das Vorhandensein der Führungssegmente die Führung der Kernbohrkrone beim Anbohren verbessert.

Vorteilhaft sind die Führungssegmente aus plastisch verformbaren Metall wie höherwertigem Stahl gefertigt, wodurch die Führungssegmente entsprechend des Durchmessers der Kernbohrkrone gebogen werden können und somit das Sortiment der Führungssegmente unterschiedlicher Durchmesser technologisch einfach zu fertigen ist.

Vorteilhaft bestehen die Führungssegmente aus einem anderen, weiter vorteilhaft verschleissfesteren, Material wie bspw. Kaltarbeitsstahl, Hartmetall als die zur optimalen Verbindung mit den Hartstoffeinsätzen ausgelegten Zwischenträgersegmente wie bspw. aus. Vergütungsstahl, austenitischer Stahl wodurch die Standzeit der Führungssegmente erhöht ist.

Vorteilhaft weisen zumindest einige der Führungssegmente axiale Ausnehmungen auf, wodurch diese zusätzlich zum Abtransport von Bohrmehl beitragen.

Vorteilhaft weisen zumindest zwei Führungssegmente unterschiedliche axiale Ausnehmungen auf, wodurch diese jeweils zum Abtransport unterschiedlicher Arten von Bohrmehl optimierbar sind.

Vorteilhaft weisen die Führungssegmente umlaufend eine radiale Verjüngung auf, weiter vorteilhaft radial beidseitig, wodurch der Reibwiderstand im Kreisringbohrloch vermindert ist.

Vorteilhaft sind die Führungssegmente alternierend mit den Zwischenträgersegmenten angeordnet, wodurch eine optimale Dämpfung von angeregten Schwingungsmoden erzielt wird.

### Die Erfindung wird bezüglich eines vorteilhaften Ausführungsbeispiels näher erläutert mit:

Fig. 1 als Kernbohrkrone im Längsschnitt
Fig. 2 als Kernbohrkrone in Ansicht von unten

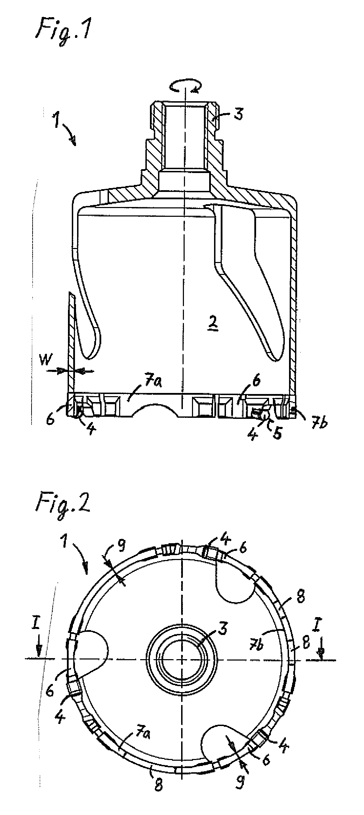

Nach den Fig. 1, 2 weist eine Kernbohrkrone 1 einen rohrförmigen Schaft 2 auf mit einer an einem Endbereich koaxial befestigten Drehmitnahme 3 zur Verbindung mit einer nicht dargestellten drehenden Werkzeugmaschine sowie mit drei umlaufend versetzten, am gegenüberliegenden offenen Endbereich angeordneten Hartstoffeinsätzen 4 in Form von PKD-Schneidelementen mit einer definierten Schneidkante 5. Jeder einzelne Hartstoffeinsatz 4 ist auf einem Zwischenträgersegment 6 aus Stahl ( 25CrMo4 ) befestigt, welches an dem offenen Endbereich befestigt ist. Der offene Endbereich weist zusätzliche Führungssegmente 7a, 7b aus höherwertigem Stahl ( X155CrVMo12-1 ) auf, an denen kein Hartstoffeinsatz 4 befestigt ist. Dabei weist das Führungssegment 7a eine geometrisch andere axiale Ausnehmung 8 als das Führungssegment 7b auf. Zudem sind an den Führungssegmenten 7a, 7b sowie an den Zwischenträgersegmenten 6, deren maximale radiale Breite etwa der des gebohrten Kreisringlochs entspricht, radial beidseitig umlaufend radiale Verjüngungen 9 ausgebildet, die in ihrer radialen Breite etwa der Wandstärke W (Fig. 1) des Schafts 2 entsprechen.

## Patentansprüche

1. Kernbohrkrone mit einem rohrförmigen Schaft (2) mit einer an einem ersten Endbereich koaxial befestigten Drehmitnahme (3) zur Verbindung mit einer drehenden Werkzeugmaschine sowie mit mehreren umlaufend versetzten, am gegenüberliegenden offenen zweiten Endbereich angeordneten Hartstoffeinsätzen (4) mit einer definierten Schneidkante (5), wobei jeder einzelne Hartstoffeinsatz (4) auf einem Zwischenträgersegment (6) befestigt ist, welches an dem zweiten Endbereich in axialer Verlängerung des Schaftes (2) befestigt ist, **dadurch gekennzeichnet, dass** der zweite Endbereich zusätzliche Führungssegmente (7a, 7b) aufweist, an denen kein Hartstoffeinsatz (4) befestigt ist.

2. Kernbohrkrone nach Anspruch 1, **dadurch gekennzeichnet, dass** die Führungssegmente (7a, 7b) aus plastisch verformbaren Metall gefertigt sind.

3. Kernbohrkrone nach Anspruch 1 oder 2, **dadurch gekennzeichnet, dass** die Führungssegmente (7a, 7b) aus einem anderen Material als die Zwischenträgersegmente (6) bestehen.

4. Kernbohrkrone nach einem der Ansprüche 1 bis 3, **dadurch gekennzeichnet, dass** zumindest ein Führungssegment (7a, 7b) eine axiale Ausnehmung (8) aufweist.

5. Kernbohrkrone nach Anspruch 4, **dadurch gekennzeichnet, dass** zumindest zwei Führungssegmente (7a, 7b) unterschiedliche axiale Ausnehmungen (8) aufweisen.

6. Kernbohrkrone nach einem der Ansprüche 1 bis 5, **dadurch gekennzeichnet, dass** die Führungssegmente (7a, 7b) umlaufend eine radiale Verjüngung (9) aufweisen.

7. Kernbohrkrone nach einem der Ansprüche 1 bis 6, **dadurch gekennzeichnet, dass** die Führungssegmente (7a, 7b) alternierend mit den Zwischenträgersegmenten (6) angeordnet sind.
